Europäisches Patentamt

European Patent Office

Office européen des brevets

(19)

(11) Numéro de publication: **0 437 671 A1**

## (12) DEMANDE DE BREVET EUROPEEN

(21) Numéro de dépôt: 90113134.2

(22) Date de dépôt: 10.07.90

(51) Int. Cl.⁵: **G01M 3/20**

(30) Priorité: 16.01.90 FR 9000441

(43) Date de publication de la demande:
24.07.91 Bulletin 91/30

(84) Etats contractants désignés:
AT BE CH DE DK ES FR GB GR IT LI LU NL SE

(71) Demandeur: **ALCATEL CIT**
**12 Rue de la Baume**
**F-75008 Paris(FR)**

(72) Inventeur: **Baret, Gilles**
**3 Passage d'Etercy**
**F-74000 Annecy(FR)**
Inventeur: **Perrillat-Amede, Denis**
**31 Avenue des Carrés**
**F-74940 Annecy le Vieux(FR)**

(74) Mandataire: **Weinmiller, Jürgen et al**
**Lennéstrasse 9 Postfach 24**
**W-8133 Feldafing(DE)**

(54) **Installation de détection de fuite à deux pompes holweck concentriques.**

(57) Installation pour la détection de fuite au moyen d'un gaz traceur, d'une enceinte (1) à tester, comprenant un ensemble mécanique de pompage secondaire (2) ayant une entrée d'aspiration (3) et une sortie de refoulement (5), un analyseur de gaz (4) relié à ladite entrée d'aspiration, une pompe préliminaire (6) reliée à ladite sortie de refoulement et une première conduite (8) munie d'une première vanne (9) dont une extrémité peut être reliée à ladite enceinte (1) et dont l'autre extrémité est reliée audit ensemble mécanique de pompage secondaire en un point de raccordement intermédiaire (7) entre ladite entrée (3) et ladite sortie (5), caractérisée en ce que ledit ensemble mécanique de pompage secondaire est une pompe à tambour du type Holweck dont la partie (10) située entre ladite entrée (3) et ledit point intermédiaire (7), appelée étage basse pression, a un taux de compression pour ledit gaz traceur de l'ordre de 10 et pour l'air de l'ordre de 300, tandis que sa vitesse de pompage est de l'ordre de 4 l/s pour l'air et de l'ordre de 2,5 l/s pour le gaz traceur et en ce que la partie (11) située entre ladite sortie (5) et ledit point intermédiaire (7), appelée étage haute pression, a un taux de compression pour l'air de l'ordre de $2.10^4$ et de l'ordre de 40 pour le gaz traceur tandis que sa vitesse de pompage est de l'ordre de 3 l/s pour l'air et de 1 l/s pour le gaz traceur, la vitesse de rotation de ladite pompe (2) étant de l'ordre de 27000 t/mn.

EP 0 437 671 A1

## INSTALLATION DE DÉTECTION DE FUITE À DEUX POMPES HOLWECK CONCENTRIQUES

La présente invention concerne une installation de détection de fuite, au moyen d'un gaz traceur, d'une enceinte à tester, comprenant un ensemble mécanique de pompage secondaire ayant une entrée d'aspiration et une sortie de refoulement, un analyseur de gaz relié à ladite entrée d'aspiration, une pompe préliminaire reliée à ladite sortie de refoulement et une première conduite munie d'une première vanne dont une extrémité peut être reliée à ladite enceinte et dont l'autre extrémité est reliée audit ensemble mécanique de pompage secondaire en un point de raccordement intermédiaire entre ladite entrée et ladite sortie.

Une telle installation de détection de fuite est notamment connue et décrite dans le brevet américain n° 4 472 962 ayant pour titre :
"Détecteur de fuite à basse pression".

Dans ce document, l'ensemble mécanique de pompage secondaire est une pompe turbomoléculaire à pales ou à disques rotatifs et le détecteur a pour but de détecter, avec une bonne sensibilité, des faibles fuites dans le fonctionnement dit à contre-courant.

La présente invention a pour but de proposer une installation de ce type comportant une pompe secondaire optimisée permettant la détection de faibles fuites, mais aussi de grosses fuites et donc de fonctionner au refoulement de la pompe secondaire à des pressions élevées, de l'ordre de plusieurs millibars.

L'invention a ainsi pour objet une installation de détection de fuite telle que définie plus haut, caractérisée en ce que ledit ensemble mécanique de pompage secondaire est une pompe à tambour du type Holweck dont la partie située entre ladite entrée et ledit point intermédiaire, appelée étage basse pression, a un taux de compression pour ledit gaz traceur de l'ordre de 10 et pour l'air de l'ordre de 300, tandis que sa vitesse de pcmpage est de l'ordre de 4 l/s pour l'air et de l'ordre de 2,5 l/s pour le gaz traceur et en ce que la partie située entre ladite sortie et ledit point intermédiaire, appelée étage haute pression, a un taux de compression pour l'air de l'ordre de $2.10^4$ et de l'ordre de 40 pour le gaz traceur tandis que sa vitesse de pompage est de l'ordre de 3 l/s pour l'air et de 1 l/s pour le gaz traceur, la vitesse de rotation de ladite pompe étant de l'ordre de 27000 t/mn.

Selon une réalisation préférée, ladite pompe à tambour du type Holweck comporte un rotor en forme de cloche à parois lisses du côté intérieur et extérieur, et un stator comportant une partie externe entourant ledit rotor en forme de cloche et une partie interne pénétrant à l'intérieur dudit rotor en forme de cloche, la paroi de chaque partie dudit stator en vis à vis dudit rotor portant des filets dont la profondeur décroît, pour chaque partie, depuis l'aspiration jusqu'au refoulement, l'étage basse pression étant constitué par l'espace situé entre le rotor et ladite partie externe du stator et l'étage haute pression étant constitué par l'espace situé entre le rotor et ladite partie interne du stator.

Selon une réalisation préférée, une deuxième conduite munie d'une seconde vanne relie en outre l'aspiration de ladite pompe préliminaire à ladite première conduite, en amont de ladite première vanne, une troisième vanne étant disposée entre la sortie de refoulement de ladite pompe à tambour et ladite pompe préliminaire.

On va maintenant donner la description d'un exemple de mise en oeuvre de l'invention en se reportant au dessin annexé dans lequel :

La figure 1 représente le schéma d'une installation de détection de fuite selon l'invention.

La figure 2 montre en vue schématique une demi-coupe axiale de la pompe secondaire de la figure 1.

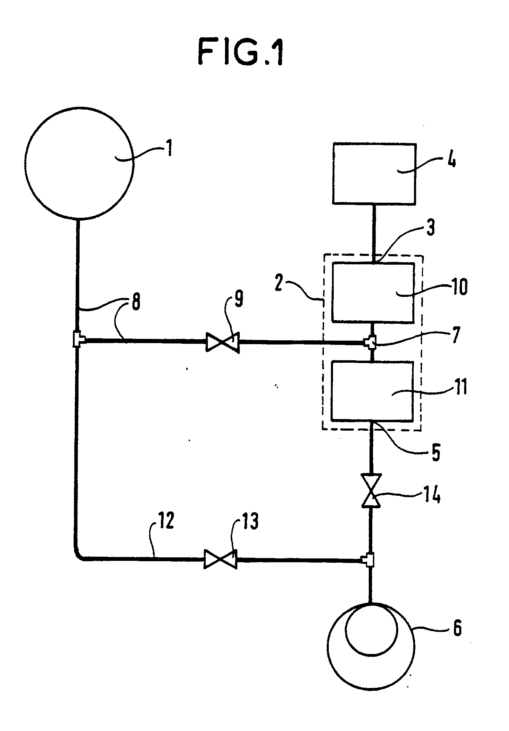

En se reportant à la figure 1, on voit une installation de détection de fuite d'une enceinte 1 à tester.

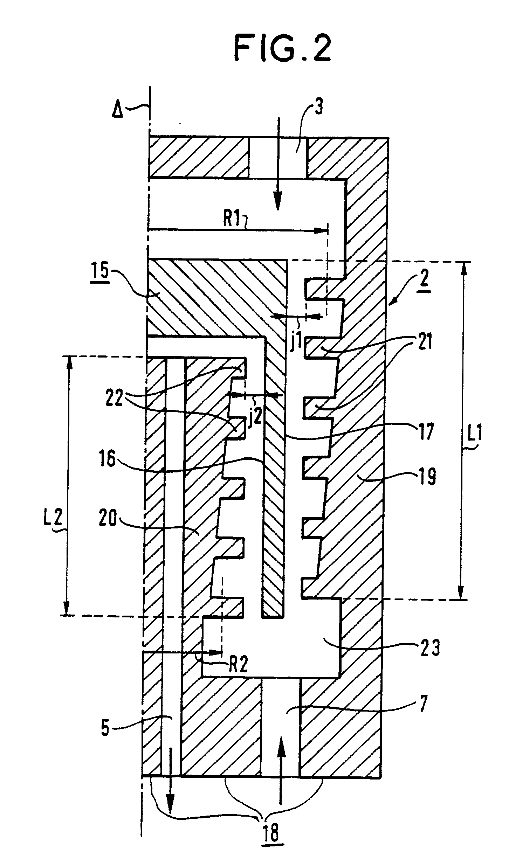

Cette installation comprend un ensemble mécanique de pompage secondaire 2 représenté plus en détail sur la figure 2 et qui selon l'invention est une pompe à tambour du type Holweck. Cette pompe comporte une entrée d'aspiration 3, reliée à un analyseur de gaz 4 tel qu'un spectromètre de masse, réglé par exemple sur l'hélium choisi comme gaz traceur, une sortie de refoulement 5 reliée à une pompe préliminaire 6 et un point de raccordement intermédiaire 7 entre l'entrée 3 et la sortie 5.

Le point de raccordement intermédiaire 7 est relié à une première conduite 8 munie d'une première vanne 9, dont l'autre extrémité peut être raccordée, au moyen d'une bride non représentée, à l'enceinte à tester 1.

Le système fonctionne à contre-courant à travers la partie basse pression 10 de la pompe 2 qui présente un faible taux de compression $\tau_1$ pour l'hélium de l'ordre de 10 tandis que pour l'air le taux de compression de cette partie basse pression 10 est de l'ordre de 300. Pour cette même partie basse pression 10 de la pompe 2, la vitesse de pompage est d'environ 4 l/s pour l'air et d'environ 2,5 l/s pour l'hélium.

La partie haute pression 11 de la pompe 2, située entre le point de raccordement intermédiaire 7 et le refoulement 5, possède un taux de compression $\tau_2$ d'environ 40 pour l'hélium et un taux de compression d'environ $2.10^4$ pcur l'air tandis

que sa vitesse de pompage est d'environ 3 l/s pour l'air et sa valeur $S_1$ pour l'hélium est d'environ 1 l/s. Enfin, la vitesse de rotation de la pompe 2, du type Holweck à tambour, est relativement faible et de l'ordre de 27000 tours/mn, ce qui diminue l'effet gyroscopique et permet donc de déplacer l'appareil en fonctionnement.

Pour permettre la mesure de grosses fuites, l'installation est complétée par une seconde conduite 12 munie d'une seconde vanne 13, reliant l'aspiration de la pompe préliminaire 6, à la première conduite 8, en amont de la première vanne 9. Une troisième vanne 14 disposée entre le refoulement de la pompe 2 et la pompe préliminaire 6 complète alors l'installation.

Lors d'un test en fonctionnement "grosse fuite", la vanne 9 est fermée et les vannes 13 et 14 sont ouvertes. On fonctionne alors en contre-courant total à travers les deux parties, haute pression 11 et basse pression 10 de la pompe 2.

Le mode de fonctionnement "grosse fuite" permet de réaliser des tests à des pressions élevées (jusqu'à une dizaine de millibars) dans l'enceinte à tester. Cette pression de test élevée est rendue possible par l'utilisation d'une double pompe de type Holweck qui possède l'avantage d'un rendement en puissance bien supérieur au rendement d'une pompe turbomoléculaire pour des pressions supérieures à $10^{-1}$ mbar.

Lors d'un test en petite fuite, après le prévidage de l'enceinte 1, la vanne 13 est fermée et les vannes 9 et 14 sont ouvertes. Dans cette disposition, le signal de sortie I délivré par le spectromètre de masse

4 (courant ionique) est donné par la formule :

$$I = K.Q \; \frac{1}{S_1} \cdot \frac{1}{\tau_1}$$

formule dans laquelle K est la sensibilité du spectromètre de masse 4 ; Q le flux de fuite pour le gaz traceur (hélium) rentrant dans l'enceinte 1 ; $S_1$ la vitesse de pompage en hélium de la partie haute pression 11 de la pompe 2 et $\tau_1$ le taux de compression, pour l'hélium, de la partie basse pression 10 de la pompe 2.

Le flux de fuite minimal recherché étant de $10^{-9}$ mbar l/s, et le rapport $\frac{I}{K}$ correspondant à ce flux étant de $10^{-10}$ mbar, il ressort de la formule que : $\tau_1 . \varsigma_1 = 10$.
On choisit : $\tau_1 = 10$ et $\varsigma_1 = 1$ l/s.
Ainsi la vitesse de pompage Hélium $\varsigma_1$ de la partie haute pression 11 de la pompe 2 est relativement faible afin d'obtenir la sensibilité recherchée mais suffisamment élevée tout de même pour que le temps de réponse du système soit compatible avec les volumes des pièces à tester.

Le système peut également fonctionner en mode grosse fuite. Dans ce mode la vanne de prévidage 13 est ouverte, la vanne de refoulement 14 est également ouverte et la vanne de détection 9 est fermée.

Pour pouvoir fonctionner à haute pression, il faut :
- Que la partie haute pression 11 de la pompe 2 puisse fonctionner avec une forte pression à son refoulement, ce qui est rendu possible par l'utilisation d'une pompe Holweck.
- Que le produit des taux de compression, pour l'air, des deux parties 10 et 11 de la pompe 2 soit le plus important possible. Ce produit est supérieur à 1.000.000 dans le cadre de l'invention. Ce résultat est obtenu grâce au fort taux de compression de la partie haute pression 11 de la pompe 2.

Ainsi, on constate qu'il est nécessaire, lors de la conception de la double pompe secondaire 2, de pouvoir réaliser des étages de pompage dont les paramètres : taux de compression et vitesse de pompage soient suffisamment indépendants pour obtenir un résultat optimal. Ceci est rendu possible par la réalisation d'une pompe Holweck dont :
- la vitesse de pompage ne dépend pratiquement que de la profondeur des filets en début d'étage,
- le taux de compression ne dépend pratiquement que du jeu entre rotor et stator et de la longueur de l'étage.

La vitesse de rotation est également un facteur déterminant la vitesse de pompage et le taux de compression, mais on la choisit suffisamment faible pour que la résistance mécanique de l'ensemble de la pompe en rotation soit excellente. Elle est égale à 27000 t/mn dans l'invention.

La figure 2 montre la pompe utilisée.

Il s'agit d'une pompe de type Holweck à tambour. Elle comporte un rotor 15 en forme de cloche dont les parois interne 16 et externe 17 sont lisses, et un stator 18 en deux parties.

Le stator 18 comprend une partie externe 19 entourant le rotor 15 et une partie interne 20 qui pénètre dans le rotor 15.

La paroi de chaque partie du stator, située en vis à vis du rotor 15 porte des filets : 21 pour la partie externe 19 du stator et 22 pour la partie interne 20 du stator.

La pompe représentée possède une entrée d'aspiration 3, une sortie de refoulement 5 et un point de piquage intermédiaire 7 situé entre l'entrée 3 et la sortie 5. L'étage basse pression 10 (figure 1) de la pompe est situé entre l'entrée 3 et le raccordement intermédiaire 7 dans l'espace situé entre la paroi externe 17 du rotor 15 et la partie externe 19 du stator 18 et l'étage haute pression 11 (figure 1) est situé entre le raccordement intermédiaire 7 et la sortie 5 dans l'espace situé entre la paroi interne 16 du rotor 15 et la partie interne 20 du stator 18. Le raccordement intermédiaire 7 aboutit à une chambre annulaire 23 qui constitue le refoulement de la partie basse pression 10 et l'aspiration de la partie haute pression de la pompe 2.

Comme le montre la figure 2, les filets 21, 22 ont une profondeur qui pour chaque partie, basse pression et haute pression, vont en décroissant depuis l'aspiration jusqu'au refoulement.

A titre d'exemple, pour obtenir les caractéristiques fonctionnelles de la pompe données plus haut, on a les caractéristiques constructives suivantes :

- Chaque étage possède cinq filets usinés depuis l'aspiration, sur une longueur de 20 mm qui se subdivisent ensuite chacun en deux, soit dix filets jusqu'au refoulement.
- L'angle d'inclinaison des filets par rapport à l'axe $\Delta$ de rotation de la pompe est de 65°.
- La profondeur des filets en début de l'étage basse pression est de 4 mm et de 1 mm en fin d'étage basse pression.
- La profondeur des filets en début de l'étage haute pression est de 3 mm et de 0,25 mm en fin d'étage haute pression.
- La longueur $L_1$ de l'étage basse pression est de 90 mm et celle $L_2$ de l'étage haute pression de 75 mm.
- Le jeu $j_1$ de l'étage basse pression est de 0,3 mm et le jeu $j_2$ de l'étage haute pression est de 0,1 mm.
- Le rayon moyen $R_1$ des filets de l'étage basse pression est de 36 mm.
- Le rayon moyen $R_2$ des filets de l'étage haute pression est de 30 mm.
- La vitesse de rotation de la pompe est de 27000 t/mn.

Comme le montre la figure 2, la constitution mécanique de la pompe est telle que le raccordement intermédiaire 7 et le refoulement 5 de la pompe sont situés sur le fond de la pompe, ce qui permet de simplifier les divers raccordements et également de diminuer les coûts d'usinage de la pompe elle-même.

**Revendications**

1. Installation pour la détection de fuite au moyen d'un gaz traceur, d'une enceinte (1) à tester, comprenant un ensemble mécanique de pompage secondaire (2) ayant une entrée d'aspiration (3) et une sortie de refoulement (5), un analyseur de gaz (4) relié à ladite entrée d'aspiration, une pompe préliminaire (6) reliée à ladite sortie de refoulement et une première conduite (8) munie d'une première vanne (9) dont une extrémité peut être reliée à ladite enceinte (1) et dont l'autre extrémité est reliée audit ensemble mécanique de pompage secondaire en un point de raccordement intermédiaire (7) entre ladite entrée (3) et ladite sortie (5), caractérisée en ce que ledit ensemble mécanique de pompage secondaire est une pompe à tambour du type Holweck dont la partie (10) située entre ladite entrée (3) et ledit point intermédiaire (7), appelée étage basse pression, a un taux de compression pour ledit gaz traceur de l'ordre de 10 et pour l'air de l'ordre de 300, tandis que sa vitesse de pompage est de l'ordre de 4 l/s pour l'air et de l'ordre de 2,5 l/s pour le gaz traceur et en ce que la partie (11) située entre ladite sortie (5) et ledit point intermédiaire (7), appelée étage haute pression, a un taux de compression pour l'air de l'ordre de $2.10^4$ et de l'ordre de 40 pour le gaz traceur tandis que sa vitesse de pompage est de l'ordre de 3 l/s pour l'air et de 1 l/s pour le gaz traceur, la vitesse de rotation de ladite pompe (2) étant de l'ordre de 27000 t/mn.

2. Installation selon la revendication 1, caractérisée en ce qu'une deuxième conduite (12) munie d'une seconde vanne (13) relie en outre l'aspiration de ladite pompe préliminaire (6) à ladite première conduite (8) en amont de ladite première vanne (9), une troisième vanne (14) étant disposée entre la sortie de refoulement (5) de ladite pompe à tambour (2) et ladite pompe primaire (6).

3. Installation selon la revendication 1, caractérisée en ce que ladite pompe à tambour du type Holweck comporte un rotor (15) en forme de cloche à parois lisses du côté intérieur (16) et extérieur (17), et un stator (18) comportant une partie externe (19) entourant ledit rotor (15) en forme de cloche et une partie interne (20) pénétrant à l'intérieur dudit rotor (15) en forme de cloche, la paroi de chaque partie dudit stator (18) en vis à vis dudit rotor (15), portant des filets (21, 22) dont la profondeur décroît pour chaque partie, depuis l'aspiration jusqu'au refoulement, l'étage basse pression (10) étant constitué par l'espace situé entre le rotor (15) et ladite partie externe (19) du stator et l'étage haute pression (11) étant constitué par l'espace situé entre le rotor (15) et ladite partie interne (20) du stator.

4. Installation de détection de fuite selon la revendication 2, caractérisée en ce que la mesure en mode grosse fuite est réalisé en fermant ladite première vanne (9) et en ouvrant lesdites seconde et troisième vannes (13, 14).

5. Installation de détection de fuite selon la revendication 2, caractérisée en ce que la mesure en mode petite fuite est réalisée en fermant ladite seconde vanne (13) et en ouvrant lesdites première et troisième vannes (9, 14).

EP 0 437 671 A1

# FIG.1

# FIG.2

# RAPPORT DE RECHERCHE EUROPEENNE

Office européen des brevets

Numero de la demande

EP 90 11 3134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 893 497 (P. DANIELSON) <br> * Résumé; figure 3 * <br> --- | 1 | G 01 M 3/20 |
| A | FR-A-2 604 522 (ALCATEL S.A.) <br> * Résumé; page 4, ligne 14; figures * <br> --- | 1 | |
| A | EP-A-0 245 843 (ALCATEL HOCHVAKUUMTECHNIK GmbH) <br> * Résumé; colonne 2, ligne 14; figure * <br> ----- | 1 | |

**DOMAINES TECHNIQUES RECHERCHES (Int. Cl.5)**

G 01 M 3

Le présent rapport a été établi pour toutes les revendications

| Lieu de la recherche | Date d'achèvement de la recherche | Examinateur |
|---|---|---|
| LA HAYE | 25-09-1990 | VAN ASSCHE P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)